(19) Europäisches Patentamt
European Patent Office
Office européen des brevets

(11) Veröffentlichungsnummer: **0 296 451**
**A2**

# (12) EUROPÄISCHE PATENTANMELDUNG

(21) Anmeldenummer: **88109422.1**

(51) Int. Cl.4: **C08G 63/60 , C09K 19/38**

(22) Anmeldetag: **14.06.88**

(30) Priorität: **26.06.87 DE 3721055**

(43) Veröffentlichungstag der Anmeldung:
**28.12.88 Patentblatt 88/52**

(84) Benannte Vertragsstaaten:
**DE FR GB IT NL**

(71) Anmelder: **BAYER AG**

**D-5090 Leverkusen 1, Bayerwerk(DE)**

(72) Erfinder: **Eckhardt, Volker, Dr.**
**Bodelschwinghstrasse 14**
**D-4150 Krefeld(DE)**
Erfinder: **Dicke, Hans-Rudolf, Dr.**
**Baumhofstrasse 28**
**D-5780 Bestwig(DE)**
Erfinder: **Hammerschmidt, Erich, Dr.**
**Kicke 19**
**D-5060 Bergisch Gladbach 2(DE)**
Erfinder: **Bottenbruch, Ludwig, Dr.**
**Wöhlerstrasse 5**
**D-4150 Krefeld(DE)**
Erfinder: **Kleiner, Frank, Dr.**
**Am Sonnenhang 62**
**D-5090 Leverkusen 3(DE)**
Erfinder: **Blank, Heinz-Ulrich, Dr.**
**Am Geusfelde 35**
**D-5068 Odenthal(DE)**

## (54) Thermotrope aromatische Polyester mit hoher Reissdehnung, Verfahren zu ihrer Herstellung und ihre Verwendung zur Herstellung von Formkörpern, Filamenten, Fasern und Folien.

(57) Thermotrope vollaromatische Polyester auf Basis von p-Hydroxybenzoesäure, aromatischer Dicarbonsäure und Diphenol, deren Dicarbonsäurereste mindestens zum Teil aus 3,3′-Diphenyldicarbonsäureresten bestehen, besitzen hervorragende mechanische Eigenschaften, insbesondere ausgezeichnete Reißdehnung.

EP 0 296 451 A2

# Thermotrope aromatische Polyester mit hoher Reißdehnung, Verfahren zu ihrer Herstellung und ihre Verwendung zur Herstellung von Formkörpern, Filamenten, Fasern und Folien

Die Erfindung betrifft hochmolekulare thermotrope vollaromatische Polyester mit hervorragenden mechanischen Eigenschaften, insbesondere ausgezeichneter Reißdehnung, ein Verfahren zu ihrer Herstellung und ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polykondensate sind hinreichend bekannt, vergleiche z.B.

F. E. McFarlane et al., Liquid Crystal Polymers II, Contemporary Topics in Polymer Science, Vol. 2, Plenum Publishing Corporation, 1977;

W. J. Jackson und H. F. Kuhfuss, J. Polymer Science, Polymer Chem. Ed. 14, 2042 (1976);

W. C. Wooten et al. in A. Ciferri "Ultra-high Modulus Polymers", Applied Science Publ., London 1979, S. 362 f;

A. Blumstein et al., "Liquid Crystalline Order in Polymers", Academic Press 1978;

J. Preston, Angew, Makromol. Chem. 109/110, S. 1-19 (1982);

A. Ciferri, W. R. Krigbaum, R. B. Meyer "Polymer Liquid Crystals", Academic Press, New York, 1982;

M. G. Dobb und J. E. McIntyre, Advances in Polymer Science 60/61, Springer-Verlag, Berlin 1984;

EP 1185, 1340, 8855, 11 640, 15 856, 17 310, 18 145, 18 709, 22 344, 44 205, 49 615, 131 846, 132 637, 134 956, 134 959, 141 320, 165 399, 170 935, 189 073;

US 3 991 013, 3 991 014, 4 066 620, 4 067 852, 4 083 829, 4 107 143;

WO 79/797, 79/1030, 79/1040.

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polyesterschmelzen betrug 100 µm.

Die Untersuchung der Polyester erfolgt nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten Schmelze auftrat, wurde der Polyester als thermotrop flüssig-kristallin eingestuft.

Die flüssig-kristallinen Polyester zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteile gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G. W. Gray und P. A. Windsor, "Plastic Crystals, Physico-Chemical Properties und Methods of Investigation", insbesondere Chapter 3, John Wiley & Sons, New York, Sidney, Toronto 1974 beschrieben ist.

Formkörper, die aus flüssig-kristalliner Schmelze vollaromatischer Polyester hergestellt werden, weisen mechanische Festigkeiten und Steifigkeiten auf, wie sie normalerwiese bei unverstärkten, aus isotroper Schmelze verarbeiteten Polyestern nicht gefunden werden; jedoch läßt die Reißdehnung solcher Formkörper manche Wünsche offen.

Für viele Anwendung, z.B. im Bereich der Optoelektronik, werden jedoch Werkstoffe mit hoher Reißdehnung benötigt.

Aufgabe der vorliegenden Erfindung war es daher, thermotrope vollaromatische Polyester bereitzustellen, die hervorragende mechanische Eigenschaften, insbesondere ausgezeichnete Reißdehnung, aufweisen.

Überraschenderweise wurde nun gefunden, daß vollaromatische Polyester, die einkondensierte Reste von p-Hydroxybenzoesäure, 3,3'-Diphenyldicarbonsäure und bestimmten Diphenolen enthalten, die gewünschten vorteilhaften Eigenschaften besitzen.

Gegenstand der Erfindung sind thermotrope vollaromatische Polyester mit wiederkehrenden Einheiten der Formeln

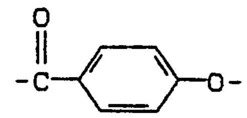

(I)

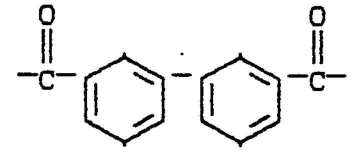

(II)

und -O-Ar-O- (III)

worin Ar zu 0 bis 100, vorzugsweise 50 bis 80 Mol-% aus 1,4-Phenylenresten und zu 100 bis 0, vorzugsweise 50 bis 20 Mol-% aus anderen 6 bis 18 C-Atome enthaltenden bivalenten aromatischen Resten, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, besteht

mit der Maßgabe, daß das Molverhältnis I/II 0,1 bis 4,0, vorzugsweise 0,5 bis 3,0 und insbesondere 0,75 bis 1,5, und das Molverhältnis II/III 0,95 bis 1,05, vorzugsweise 0,98 bis 1,02, insbesondere 1,0, betragen.

Bei der Verwendung von Diphenolen, die Reste Ar enthalten, deren kettenverlängernde Bindungen gewinkelt sind oder die substituiert sind, wird man eine Menge nicht überschreiten, die die thermotropen Eigenschaften der resultierenden Polyester verlorengehen läßt.

Bevorzugte Diphenole, die zu Einheiten III führen, in denen Ar kein 1,4-Phenylenrest ist, sind beispielsweise 4,4'-Dihydroxydiphenyl, 1,4-, 1,5-, 2,6- und 2,7-Naphthalindiol, Chlorhydrochinon, Methylhydrochinon, Phenylhydrochinon, Resorcin, Bisphenol-A, o,o,o',o'-Tetramethyl-, -chlor-, -brombisphenol-A, 4,4'-Dihydroxydiphenylketon, 4,4'-Dihydroxydiphenylsulfid sowie Mischungen der genannten Verbindungen. Besonders bevorzugt ist 4,4'-Dihydroxydiphenyl.

In den erfindungsgemäßen Polyestern können bis zu 10 % der Einheiten II durch andere Dicarbonsäurereste ersetzt werden, deren kettenverlängernde Bindungen coaxial oder parallel entgegengesetzt oder gewinkelt sind. Dicarbonsäuren, die zu solchen Resten führen, sind vorzugsweise Terephthalsäure, Isophthalsäure, 4,4'-Diphenyldicarbonsäure, 4,4'-Terphenyldicarbonsäure, 2,6-, 1,4-, 1,5-, 2,7-Naphthalindicarbonsäure, Azobenzoldicarbonsäure, Stilbendicarbonsäure, Tolandicarbonsäure, 4,4'-, 3,4'-Diphenyletherdicarbonsäure, 4,4'-, 3,4'-Benzophenondicarbonsäure und Methyl-, Ethyl-, Phenyl- und Chlorterephthalsäure.

Die erfindungsgemäßen Polyester können bis zu 10 Mol-% Carbonatgruppen, bezogen auf die Summe von Ester- und Carbonatgruppen, enthalten, sind jedoch vorzugsweise frei von Carbonatgruppen.

Die erfindungsgemäßen Polyester können die Reste I und die Einheiten aus den Resten II und III in statistischer Verteilung oder in Blöcken enthalten.

Als Endgruppen können die erfindungsgemäßen Polyester -COOH, -H, -OH, $-OC_6H_5$, Acyloxy oder von Kettenabbrechern herrührende Reste enthalten. Bevorzugte Kettenabbrecher sind monofunktionelle aromatische Hydroxylverbindungen wie 4-Hydroxydiphenyl, p-Nonylphenol, 4-(1,1,3,3-Tetramethylbutyl)-phenol, β-Naphthol und aromatische Monocarbonsäuren, wie Diphenylcarbonsäuren und Naphthalincarbonsäuren. Kettenabbrecher können in Mengen von 0,5 bis 5 Mol-%, bei Carbonsäuren bezogen auf die Summe der Reste I und II, bei Phenolen bezogen auf die Reste I und III, eingesetzt werden.

Es können auch verzweigende drei- oder höherfunktionelle - vorzugsweise aromatische - Monomere in Mengen von 0,1 bis 1,0 Mol-%, bezogen auf die Summe der Reste I, II und III, wie z.B. Phloroglucin, 1,3,5-Benzoltricarbonsäure und 3,5-Dihydroxybenzoesäure, eingesetzt werden.

Die erfindungsgemäßen Polyester besitzen in der Regel eine inhärente Viskosität von mindestens 0,5, vorzugsweise von mindestens 1,0 dl/g (gemessen an einer Lösung von 5 mg Polyester/ml p-Chlorphenol bei 45° C). Sollten Polyester in p-Chlorphenol unlöslich sein, wird angenommen, daß sie die angegebene Mindestviskosität besitzen; sie sind somit erfindungsgemäß, sofern sie den Parametern des Hauptanspruchs genügen.

Die erfindungsgemäßen Polyester besitzen vorzugsweise eine Schmelzviskosität von weniger als 1.000 Pa.s, gemessen bei einer Schergeschwindigkeit von $10^3$ $sec^{-1}$ unter Verwendung einer Düse mit einem Länge/Durchmesserverhältnis von 20 bei einer Temperatur von weniger als 370° C.

Die erfindungsgemäßen Polyester können nach verschiedenen Verfahren hergestellt werden, z.B. durch

Kondensation bzw. Umesterung der von den Resten I, II und III abgeleiteten Hydroxycarbonsäuren, Dicarbonsäuren und Diphenolen oder ihrer reaktionsfähigen Derivate und anschließende Polykondensation.

Beispiele für bevorzugte Ausgangsverbindungen sind ihre Arylester, ihre Acylester und ihre Säurechloride.

Nach einem bevorzugten Syntheseverfahren werden die niederen Acylester, vorzugsweise die Acetate, der von den Resten I und III abgeleiteten Hydroxycarbonsäuren bzw. Diphenole mit den von den Resten II abgeleiteten Dicarbonsäuren umgesetzt, wobei die Acylester auch in situ hergestellt werden können.

Diese Reaktionen können in der Schmelzphase durchgeführt werden; möglich ist jedoch auch die Reaktion in Gegenwart eines flüssigen wärmeüberleitenden Mediums, das einen hohen Siedepunkt hat.

Die Reste I, II und III werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Di-butylzinndiacetat, Di-butyl-dimethoxy-zinn.

Die Katalysatormengen betragen vorzugsweise 0,001 bis 1, insbesondere 0,01 bis 0,2 Gew.-%, bezogen auf das Gesamtgewicht der eingesetzten Monomeren.

Die erfindungsgemäßen Polyester können bei Temperaturen von 150 bis 370 °C hergestellt werden, wobei man im all gemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann - in Granulat- oder Pulverform - einer Festphasennachkondensation unter vermindertem Druck bei Temperaturen von 150 bis 300 °C unterworfen werden; nach 1 bis 25 Stunden habe sich das Molekulargewicht erhöht und die daraus resultierenden Eigenschaften des Polyesters merklich verbessert.

Weiterer Gegenstand der Erfindung ist also ein Verfahren zur Herstellung der neuen Polyester durch Umsetzung der von den Resten I, II und III abgeleiteten Hydroxycarbonsäuren, Dicarbonsäuren und Diphenole bzw. ihrer reaktiven Derivate, die auch in situ hergestellt werden können, gegebenenfalls in Gegenwart von Katalysatoren, Kettenabbrechern und Verzweigungsmitteln, bei Temperaturen von 150 bis 370 °C, gegebenenfalls unter vermindertem Druck.

Die erfindungsgemäßen thermotropen Polyester können aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgepräg te Strukturviskosität, das heißt, daß die Schmelzviskosität bei Erhöhung der Scherkräfte stark abfällt. Geeignete Verarbeitungsverfahren sind Spritzguß, Extrusion, Pultrusion, Pressen, Thermoformen und Schmelzspinnen.

Da die erfindungsgemäßen Polyester außerordentlich chemikalienresistent und flammwidrig sind, eignen sie sich bevorzugt zur Herstellung von

- Umhüllungen von Lichtwellenleitern,
- elektrotechnischen Artikeln, wie z.B. Isolatoren, Leiterplatten für gedruckte Schaltungen, Steckkontakten, Umhüllungen für integrierte Schaltungen, Armaturenteilen,
- Teilen für chemisch-technische Anlagen, wie z.B. Rohren, Behälterauskleidungen, Rotoren, Gleitlagern, Dichtungen, Füllkörpern,
- Teilen der Flugzeuginnenausstattung,
- Teilen medizinisch-technischer Geräte, wie z.B. Bauteilen von Klimaanlagen, Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärkerbzw. Füllstoffgehalt von 5 bis 65 Gew.-%, bezogen auf verstärkte bzw. gefüllte Formmassen, sind sie bestens geeignet.

Weiterer Gegenstand der Erfindung ist also die Verwendung der neuen Polyester zur Herstellung von

Formkörpern, Filamenten, Fasern und Filmen.

## Beispiele

Die Reißdehnung $\epsilon_R$ wurde gemäß DIN 53 455 (ISO/R 527) gemessen.

## Beispiel 1

In ein mit Stickstoff gespültes und ausgeheiztes 1 l-Planschliffgefäß mit Planschliffdeckel, Rührer, Stickstoffeinleitung und Vigreuxkolonne mit Destillationsaufsatz wurden folgende Substanzen eingewogen:

0,50 Mol ≙ 69,1 g p-Hydroxybenzoesäure,
0,50 Mol ≙ 121,1 g 3,3'-Diphenyldicarbonsäure,
0,33 Mol ≙ 36,3 g Hydrochinon,
0,17 Mol ≙ 31,7 g 4,4'-Dihydroxydiphenyl,
1,65 Mol ≙ 168,5 g Essigsäureanhydrid,
0,05 g Magnesiumacetat und
0,05 g Germaniumdioxid.

Unter Stickstoffatmosphäre wurde mittels Salzbad auf 200 °C erhitzt. Anschließend wurde über einen Zeitraum von 5 Stunden durch stufenweise Erhöhung der Badtemperatur bis auf 325 °C die Hauptmenge Essigsäure abdestilliert (ca. 180 g). Zur Vervollständigung des Umsatzes wurde der Druck im Verlauf einer weiteren Stunde stufenweise bis auf 20 mbar abgesenkt. Während dieser Vakuumphase nahm die Viskosität der entstandenen Polymerschmelze stark zu. Die Schmelze wurde daher langsamer gerührt.

Am Ende dieser Phase war eine Gesamtmenge von 194,6 g Essigsäure (enthält überschüssiges Acetanhydrid) aufgefangen worden.

Das hellbeige Reaktionsprodukt mit einer inhärenten Viskosität von 1,2 dl/g wurde gemahlen und bei 250 °C einer Festphasennachkondensationsreaktion unterworfen (15 Stunden bei einem Druck von 1 mbar). Der so erhaltene Polyester war in p-Chlorphenol unlöslich und wies im Bereich von 280 bis 400 °C eine optisch anisotrope Schmelzphase auf.

## Beispiele 2 - 9

Zur Herstellung der in Tabelle 1 aufgelisteten Polyester wurde die in Beispiel 1 beschriebene Reaktionsapparatur und das dort beschriebene Verfahren verwendet.

Tabelle 1

| Beispiel | PHB (Mol-%) | 3,3'-DDC (Mol-%) | Hy (Mol-%) | Cobisphenol | | inhärente Viskosität* (dl/g) | anisotrope Phase (°C) |
|---|---|---|---|---|---|---|---|
| | | | | Typ | Gehalt (Mol-%) | | |
| 2 | 60 | 40 | 26 | DOD | 14 | 1,16 | 270 - 400 |
| 3 | 70 | 30 | 20 | DOD | 10 | 1,69 | 290 - 400 |
| 4 | 75 | 25 | 16 | DOD | 9 | 1,65 | 295 - 400 |
| 5 | 60 | 40 | 20 | DOD | 20 | 1,03 | 280 - 400 |
| 6 | 60 | 40 | 14 | DOD | 26 | 1,54 | 300 - 400 |
| 7 | 60 | 40 | 30 | DOD | 10 | 1,02 | 290 - 400 |
| 8 | 60 | 40 | 26 | DODE | 14 | 1,48 | 270 - 400 |
| 9 | 60 | 40 | 26 | RES | 14 | 1,72 | 285 - 400 |

PHB = p-Hydroxybenzoesäure
3,3'-DDC = 3,3'-Diphenyldicarbonsäure
Hy = Hydrochinon
DOD = 4,4'-Dihydroxydiphenyl
DODE = 4,4'-Dihydroxydiphenylether
RES = Resorcin

* vor der Festphasennachkondensation (alle nachkondensierten Produkte enthielten unlösliche Anteile)

Zur Prüfung der Reißdehnung wurden aus den Polyestern der Beispiele 1 bis 9 durch Spritzguß Zugstäbe hergestellt. Die Verarbeitung der Polyester erfolgte bei Temperaturen zwischen 290 und 330 °C. In Tabelle 2 sind die gemessenen Werte aufgeführt.

Tabelle 2

| Beispiel | $\varepsilon_{R(\%)}$ |
|---|---|
| 1 | 3,0 |
| 2 | 3,0 |
| 3 | 2,6 |
| 4 | 2,0 |
| 5 | 2,9 |
| 6 | 2,5 |
| 7 | 2,4 |
| 8 | 2,7 |
| 9 | 2,9 |

**Ansprüche**

1. Thermotrope vollaromatische Polyester mit wiederkehrenden Einheiten der Formeln

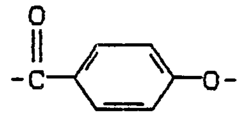

(I)

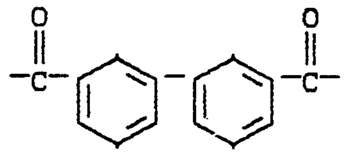

(II)

und -O-Ar-O- (III)
worin Ar zu 0 bis 100 Mol-% aus 1,4-Phenylenresten und zu 100 bis 0 Mol-% aus anderen 6 bis 18 C-Atome enthaltenden bivalenten aromatischen Resten, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, besteht
mit der Maßgabe, daß das Molverhältnis I/II 0,1 bis 4,0, und das Molverhältnis II/III 0,95 bis 1,05, betragen.

2. Polyester nach Anspruch 1, dadurch gekennzeichnet, daß das Molverhältnis I/II 0,5 bis 3,0 beträgt.

3. Polyester nach Ansprüchen 1 und 2, dadurch gekennzeichnet, daß das Molverhältnis I/II 0,75 bis 1,5 beträgt.

4. Polyester nach Ansprüchen 1 bis 3, dadurch gekennzeichnet, daß Ar zu 50 bis 80 Mol-% aus einem 1,4-Phenylenrest und zu 50 bis 20 Mol-% aus anderen 6 bis 18 C-Atome enthaltenden bivalenten aromatischen Resten, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, besteht.

5. Polyester nach Ansprüchen 1 bis 4, dadurch gekennzeichnet, daß Ar ausschließlich für 1,4-Phenylenund/oder 4,4'-Diphenylenreste steht.

6. Polyester gemäß Ansprüchen 1 bis 5, dadurch gekennzeichnet, daß Ar aus einer Mischung von 1,4-Phenylenresten und 4,4'-Diphenylenresten im Molverhältnis von 2/1 bis 1/2 steht.

7. Verfahren zur Herstellung der Polyester nach Ansprüchen 1 bis 6 durch Umsetzung der von den Resten I bis III abgeleiteten Hydroxycarbonsäuren, Dicarbonsäuren und Diphenole bzw. ihrer reaktions fähigen Derivate, die auch in situ hergestellt werden können, gegebenenfalls in Gegenwart von Kettenabbrechern, Verzweigungsmitteln und Katalysatoren, bei Temperaturen von 150 bis 370° C, gegebenenfalls unter vermindertem Druck.

8. Verfahren nach Anspruch 7, dadurch gekennzeichnet, daß sich eine Festphasennachkondensation anschließt.

9. Verwendung der Polyester nach Ansprüchen 1 bis 6 zur Herstellung von Formkörpern, Filamenten, Fasern und Folien.